Europäisches Patentamt

(19) European Patent Office

Office européen des brevets

(11) Numéro de publication: **0 044 790**
**A1**

## (12) DEMANDE DE BREVET EUROPEEN

(21) Numéro de dépôt: **81401151.6**

(22) Date de dépôt: **21.07.81**

(51) Int. Cl.³: **G 01 N 27/56**

(30) Priorité: **22.07.80 FR 8016122**

(43) Date de publication de la demande:
**27.01.82 Bulletin 82/4**

(84) Etats contractants désignés:
**DE FR GB IT SE**

(71) Demandeur: **SOCAPEX**
**10 bis, quai Léon Blum**
**F-92150 Suresnes(FR)**

(72) Inventeur: **Legrand, Jacques**
**THOMSON-CSF SCPi-173, bld Haussmann**
**F-75360 Paris Cedex 08(FR)**

(74) Mandataire: **Guilguet, Philippe et al,**
**"THOMSON-CSF" - SCPi 173, bld Haussmann**
**F-75360 Paris Cedex 08(FR)**

(54) Sonde d'analyse de gaz.

(57) L'invention concerne une sonde d'analyse de gaz, dont le capteur est constitué par une pile de concentration.

Le signal électrique fourni par le capteur (21) est prélevé par au moins deux tiges métalliques (22 et 23) qui sont brasées sur le capteur au moyen d'une thermo-compression sur couches minces de métal d'apport. Les sorties de connexions sont isolées dans des gaines d'alumine pure (24 et 25) maintenues dans un corps céramique (28) par remplissage de céramique (31) liquide durcie. Un ressort (37) absorbe lmes différences de dilatation, et des ailettes (35) sur l'enveloppe métallique (33) évacuent la chaleur. Un capot perforé (39) protège le capteur.

Application à la mesure de la teneur en oxygène des gaz d'échappement des moteurs à combustion interne.

## FIG.3

EP 0 044 790 A1

SONDE D'ANALYSE DE GAZ

L'invention concerne une sonde d'analyse des gaz d'échappement d'un moteur à combustion interne, et plus particulièrement la structure mécanique d'une telle sonde, en vue d'assurer à la fois sa réalisation industrielle aisée, son bon fonctionnement à l'usage et sa fiabilité dans le temps.

Les sondes d'analyse des gaz d'échappement de moteur à combustion interne ont pour fonction principale la mesure de la concentration en oxygène dans ces gaz, de façon à réagir par l'intermédiaire d'un calculateur sur le taux d'essence dans l'air, à l'admission, afin d'améliorer le rendement du moteur et diminuer les gaz imbrûlés à l'échappement.

D'une façon plus générale, ce type de sonde d'analyse des gaz est utilisé pour la mesure de la concentration d'une espèce chimique dans un mélange, mais leur application principale sous la forme envisagée est le contrôle de la combustion dans les moteurs.

De façon très courante, les sondes d'analyse des gaz utilisent pour mesurer la concentration en oxygène un capteur constitué par une pile de concentration qui délivre, entre ses bornes de sortie, une tension selon la loi de Nernst. Les conditions d'emploi, dans un courant gazeux turbulent et chaud, obligent à n'utiliser que des composants solides, et ces piles de concentration sont souvent constituées par une électrode de mesure, en platine, qui sert également de pot catalytique, une électrode de référence en nickel, et un matériau sensible à l'oxygène tel que l'oxyde de zirconium $ZrO_2$ ou l'oxyde de titane $TiO_2$, la référence en oxygène étant assurée par l'air.

Dans la pratique, la pile de concentration se présente sous forme d'un corps céramique, creux, obtenu par frittage d'oxyde de zirconium, ayant une face extérieure exposée au gaz d'échappement et une face intérieure exposée à l'air pur. Des métallisations de

2

platine sur la face extérieure et de nickel sur la face intérieure sont déposées par toute voie conforme aux règles de l'art, dépôt au pinceau, par sérigraphie ou par voie chimique. La réalisation d'une sonde sous cette forme présente un certain nombre de difficultés et des inconvénients qui sont notamment :

- des difficultés d'étanchéité au niveau du montage du cône dans le corps métallique qui sert à le fixer sur le moteur, l'étanchéité étant cependant obligatoire pour maintenir une référence d'air pur stable;

- l'empoisonnement de la pellicule de platine déposée sur la surface extérieure du cône, par le plomb qui se trouve dans l'essence. Il s'ensuit que de telles sondes de mesure d'oxygène ne sont pratiquement pas utilisables en dehors des Etats dans lesquels de l'essence est vendue sans plomb;

- les dimensions du cône de céramique font qu'il est soumis, lors de la mise en route du moteur, à un échauffement qui se transmet de façon relativement lente à travers le corps céramique, relativement isolant, et il s'ensuit un choc thermique qui peut entraîner, soit la détérioration du corps céramique, donc de la pile de concentration, soit des fuites qui faussent par conséquence la référence d'air pur, celui-ci étant alors pollué par des gaz d'échappement.

La sonde d'analyse selon l'invention est spécialement conçue pour utiliser un capteur réalisé par dépôts de couches minces sur une plaquette céramique, ce qui résoud - comme cela sera montré ultérieurement - le problème d'étanchéité ainsi que celui d'empoisonnement du platine et celui de la résistance aux chocs thermiques.

Ce type de capteur, qui sort du domaine de l'invention, a été décrit par la Société demanderesse, notamment dans le brevet français N° 76.13 843. Sa conception sur une plaquette d'alumine ou de céramique permet de le placer tout entier dans une atmosphère de gaz d'échappement, la référence étant interne au capteur, ce qui supprime les problèmes d'étanchéité de la référence par rapport à l'air, et la technologie utilisée, par la miniaturisation du capteur, élimine les chocs thermiques et permet de prendre des contacts· électriques par soudure ou brasure directement sur le capteur.

Ainsi, l'invention consiste de façon plus précise en une sonde d'analyse de gaz, comportant un capteur 21 miniaturisé, réalisé en une plaquette 1 par dépôts de couches minces, comprenant au moins deux électrodes 3 et 4 et étant entièrement plongé dans les gaz à analyser, cette sonde étant caractérisée en ce qu'elle comporte :

- au moins deux tiges métalliques 22 et 23, brasées à l'une de leurs extrémités sur le capteur 21 et gainées par deux tubes céramiques 24 et 25, à haute résistivité, dans lesquels elles sont immobilisées par écrasement partiel 26 et 27 à chaque extrémité du tube, pour prélever le signal électrique;

- un corps céramique 28, creux, dont une extrémité est munie d'orifices 29 et 30 de même diamètre que le diamètre extérieur des gaines céramiques 24 et 25, pour positionner les tiges métalliques 22 et 23;

- un remplissage, par de la céramique liquide 31 durcissable, du corps céramique 28, pour immobiliser les tiges métalliques 22 et 23;

- une enveloppe métallique 33 dotée d'ailettes de refroidissement 35;

- un ressort 37, qui s'appuie en 36 sur un épaulement du corps céramique 28 et en 38 sur l'enveloppe métallique 33, pour absorber les différences de dilatation entre les parties céramiques et les parties métalliques de la sonde.

Dans un mode préférentiel de réalisation, la composition des tubes céramiques 24 et 25 contient entre 99,5% et 99,7% en poids d'alumine. En effet, la capteur 21 de la sonde de gaz est constitué par une pile fournissant une tension dépendant de la différence de concentration d'oxygène entre ces deux électrodes. On détermine la concentration d'oxygène contenue dans le gaz par comparaison avec une concentration d'oxygène fixe. L'une des électrodes de la pile complète la combustion du moteur et absorbe l'oxygène du gaz tandis que l'autre contient une concentration d'oxygène connue,

4

servant de référence. Cette électrode de référence est un mélange métal-métal oxydé. Tout courant traversant la pile modifierait la concentration d'oxygène de l'électrode de référence. Aussi, on prélève la tension aux bornes de sortie de la pile en évitant que le capteur 21 ne délivre un courant. Les tubes céramiques 24 et 25 étant en alumine de pureté comprise entre 99,5% et 99,7%, ont une résistivité importante. Celle-ci est à 20°C de l'ordre de grandeur de $10^{14}$ $\Omega$cm, à 500°C d'environ $1,5.10^{11}$ $\Omega$cm et à 1000°C d'environ $5.10^6$ $\Omega$cm. Les céramiques plus courantes telles que la céramique du corps 28 qui contient par exemple 95% en poids d'alumine, ont des résistivités à 20°C de l'ordre de grandeur de $10^{11}$ $\Omega$cm et à 600°C de l'ordre de $10^7$ $\Omega$cm. La résistance électrique procurée par les tubes céramiques 24 et 25 évite que des courants électriques s'établissent à l'intérieur du corps 28 entre les deux tiges métalliques 22 et 23, à des températures inférieures à 1000°C. Les températures des gaz à la sortie du moteur, c'est-à-dire les températures de travail de la sonde, sont comprises entre 400°C et 900°C. Les tubes céramiques 24 et 25 ont préférentiellement une épaisseur d'environ 0,5 mm. La résistance électrique procurée par les tubes céramiques 24 et 25 est, alors supérieure à 1 giga-ohm à 850°C.

Dans un autre mode préférentiel de réalisation, une fraction 46 et 47 des deux tubes céramiques 24 et 25 émerge au-delà des orifices 29 et 30 du corps céramique 28. Les tiges métalliques 22 et 23 se prolongent jusqu'aux extrémités des tubes céramiques 24 et 25 et maintiennent le capteur 21 au-delà de leur sortie des tubes céramiques 24 et 25. Les fractions 46 et 47 sont placées à l'intérieur de la circulation des gaz. Les fractions 46 et 47 ont une longueur d'environ 2 cm. La portion de la tige métallique 22 introduite dans la fraction 46 du tube céramique 24 est donc séparée de la portion de la tige métallique 23 introduite dans la fraction 47 du tube céramique 25 par le tube céramique 24, l'air, puis le tube céramique 25.

Les fractions 46 et 47 des tubes céramiques 24 et 25 permettent de réduire les courants de fuite superficiels. Lorsque la sonde est plongé dans les gaz à analyser, une quantité de particules se déposent sur toutes les surfaces extérieures de la sonde. Ces poussières forment, alors, une légère couche qui est plus conductrice électrique que les céramiques. Aussi, un courant électrique peut s'établir entre les extrémités des tiges métalliques 22 et 23 brasées sur le capteur 21. Ce courant se propagera le long de ladite couche de poussière. Les fractions 46 et 47 des tubes céramiques 24 et 25 allongent le chemin des courants de fuite superficiels puisque ceux-ci doivent suivre la surface extérieure de la fraction 46 depuis l'extrémité de la tige 22 portant le capteur 21 jusqu'à la surface 32, aucun courant ne pouvant traverser le tube céramique 24, puis se propager le long de la surface 32 avant de remonter la surface extérieure de la fraction 47 jusqu'à l'extrémité de la tige 23, portant le capteur 21. Le chemin à parcourir par les courants de fuite est, ainsi, multiplié d'un facteur 10 et la résistance réalisée entre lesdites extrémités est supérieure à un giga-ohm.

L'invention sera mieux comprise par la description qui suit, laquelle expose un exemple de réalisation industrielle de capteur de gaz d'échappement pour automobile, et s'appuie sur les figures annexes qui représentent :

- figure 1, schéma de principe d'un capteur monté dans la sonde selon l'invention,

- figure 2, vue en coupe d'une sonde selon l'art connu,

- figure 3, vue en coupe d'une sonde selon l'invention,

- figure 4, vue de détail montrant un premier type de prise de contact électrique sur le capteur,

- figure 5, vue de détail montrant un second type de prise de contact électrique sur le capteur,

- figure 6, vue du capot de protection de la sonde.

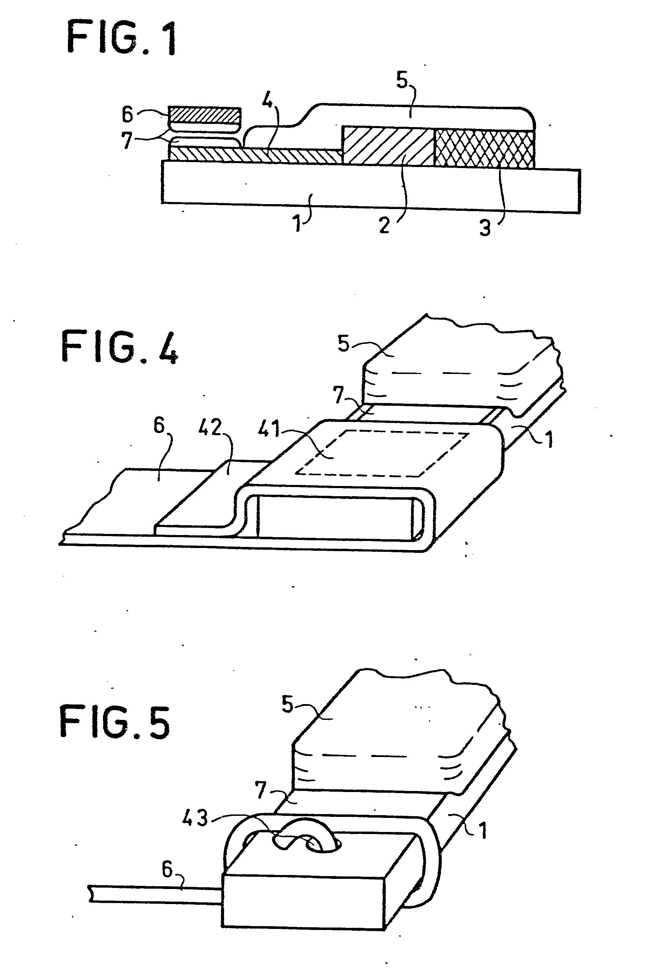

La figure 1 représente, vu en coupe, le schéma d'un capteur utilisable dans la sonde d'analyse selon l'invention. Ce capteur sort du domaine de l'invention et a fait l'objet de demandes de brevet, mais l'explication de son fonctionnement permettra de plus facilement comprendre la réalisation de la sonde selon l'invention.

Sur une plaquette 1 en alumine sont déposées une couche d'électrolyte d'oxyde de zirconium 2 et deux électrodes, une électrode de mesure 3 en platine et une électrode de référence 4 en nickel. Le platine est déposé en une couche relativement épaisse et perméable au gaz, par rapport à la couche de nickel qui est fine et imperméable. De façon à éviter que l'électrolyte d'oxyde de zirconium ne soit en contact avec les gaz d'échappement autrement qu'à travers l'électrode de mesure en platine, le tout est recouvert par une couche d'émail 5. La référence est donc une référence interne à la pile à l'interface entre le nickel et l'oxyde de zirconium. Les contacts électriques sont pris aux deux extrémités de la plaquette par des lamelles ou des fils d'acier 6 dorés en surface et soudés sur une pellicule d'or déposée par sérigraphie. La pellicule d'or 7 sur la lamelle de contact 6 et la pellicule d'or 7 déposée sur le capteur sont ensuite soudées ensemble par thermo-compression.

Sur la figure 1, un seul contact a été représenté du côté de l'électrode de nickel 4, de façon à mettre en évidence que la couche de platine 3 a une face qui est libre vis-à-vis des gaz d'échappement. En fait, un contact identique à celui qui est pris sur l'électrode de nickel est également pris sur l'électrode de platine, mais on conviendra pour la commodité du dessin que ce contact est caché derrière l'électrode de platine.

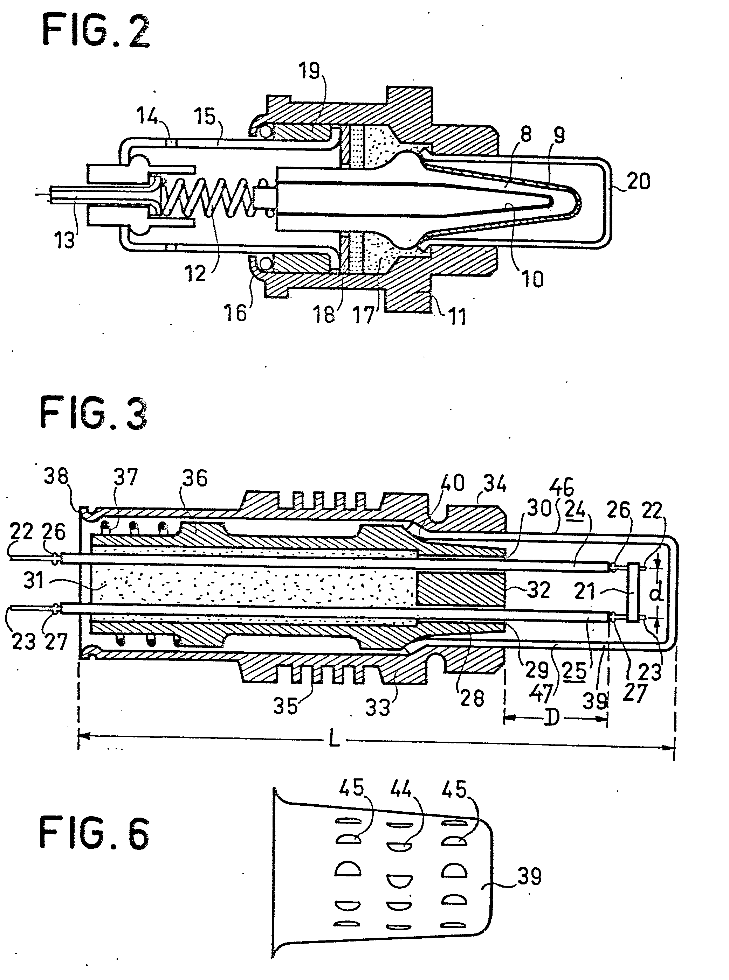

La figure 2 représente une vue en coupe d'une sonde d'analyse slon l'art connu.

La forme du capteur le plus généralement utilisé dans les sondes selon l'art connu est celle d'un tube de forme ogivale bouché à une extrémité 8. Ce tube est en oxyde de zirconium et il porte sur sa face extérieure une couche de platine 9 qui sert d'électrode de mesure et sur sa surface intérieure une couche de nickel 10 qui sert d'électrode de référence. L'un des contacts, c'est-à-dire le contact avec l'électrode extérieure 9 du capteur, est pris directement sur le corps 11 qui sert à fixer le capteur à la sortie du moteur. L'autre contact, c'est-à-dire celui qui est pris sur l'électrode de référence 10, est pris au moyen d'un ressort 12 et le signal sort par un fil électrique 13.

Le corps ogival 8 constitue une séparation entre un premier volume de gaz dans lequel baigne l'électrode de mesure 9, dans les gaz d'échappement, et un second volume de gaz dans lequel baigne l'électrode de référence 10, qui est dans une ambiance d'air, lequel pénètre à l'intérieur de la sonde de mesure par des orifices 14 pratiqués dans un capot 15 qui referme la sonde, ce capot 15 étant en outre serti en 16 de façon à assurer le montage mécanique des différentes pièces de la sonde.

L'un des problèmes relatifs aux sondes selon l'art connu réside dans l'étanchéité nécessaire entre les deux volumes qui viennent d'être définis, c'est-à-dire l'espace dans lequel se trouvent des gaz d'échappement et l'électrode de platine 9 et l'espace dans lequel se trouvent de l'air et l'électrode de mesure 10. Cette étanchéité est assurée par un joint fréquemment constitué par une bourre d'amiante imprégnée de graisse ou par du talc 17, ce joint étant pressé contre le corps 11 de la sonde et contre le corps 8 du capteur par un jeu de rondelles 18 qui sont elles-mêmes poussées par le capot 15 qui, comme cela a été dit, est serti après montage de la sonde.

Un autre problème avec ce type de sonde d'analyse réside dans la dilatation des pièces dont certaines sont soumises à la chaleur des gaz d'échappement tandis que d'autres sont seulement à la température ambiante. Le rattrapage de la dilatation des différentes pièces est assuré par un joint d'un matériau tel qu'un polymère ou de façon plus générale un joint élastique 19 qui est monté entre le corps 11 de la sonde et le capot 15 avant sertissage. Les précautions prises pour assurer une bonne étanchéité au niveau du joint d'amiante ou de talc 17 et les précautions pour absorber les différences de dilatation au niveau du joint élastique 19, n'empêchent pas que le corps de la sonde 8 relativement massif est soumis à des chocs thermiques, principalement après la mise en route du moteur.

En outre, un seul fil sort de cette sonde, puisque l'une des électrodes est à la masse. De plus, c'est l'électrode de mesure qui est à la masse, ceci peut présenter des inconvénients si la masse est parasitée ou s'il est nécessaire de fournir un signal flottant, par exemple pour un traitement par l'électronique de bord d'une automobile.

La partie conique de la pile de mesure 8, qui fait saillie à l'intérieur des tubulures des gaz d'échappement, est protégée contre ceux-ci par un capot 20 muni selon les réalisations de fentes ou de trous de formes diverses de façon à permettre au gaz d'échappement d'accéder à l'électrode de platine 9.

La figure 3 représente une vue en coupe simplifiée de la sonde d'analyse selon l'invention.

La sonde selon l'invention met en jeu comme capteur une plaquette 21 comportant un élément sensible, qui fonctionne par exemple selon le procédé décrit dans le brevet français N° 76.13 843. Cette plaquette délivre un signal électrique entre ses deux électrodes sur lesquelles sont prises des connexions qui doivent résister à la température des gaz d'échappement, aux chocs thermiques, aux vibrations et à la corrosion des gaz. Pour répondre à ces impératifs et pour assurer une bonne liaison électrique, les connexions sont effectuées par la brasure de deux tiges 22 et 23 qui constituent à la fois les supports du capteur et les sorties électriques, brasures qui sont faites directement sur la plaquette du capteur. De façon à alléger la description de la sonde selon l'invention, le détail de brasure des connexions sur le capteur sera exposé ultérieurement.

Le fonctionnement de la sonde portée par la plaquette 21, tel que décrit par le brevet français N° 76.13 843, nécessite de conserver une grande impédance entre les sorties électriques de la sonde afin d'éviter des courants de fuite qui provoqueraient un vieillissement prématuré de l'élément actif par détérioration de la référence interne. Conserver une grande impédance de sortie dans une ambiance de gaz d'échappement qui renferme des hydrocarbures non brûlés, lesquels peuvent se déposer en couches carbonnées qui favorisent les courants de fuite, est une opération délicate. Elle est résolue dans la sonde selon l'invention par l'adjonction sur les tiges métalliques 22 et 23, qui servent à la fois de conducteur électrique et de support mécanique du capteur, de tubes d'alumine pure à haute résistivité superficielle 24 et 25. La longueur de ces tubes allonge le chemin de fuite entre les électrodes et permet des impédances supérieures à un giga-ohm à 850°.

Les tiges métalliques 22 et 23 sont maintenues en place à l'intérieur des tubes d'alumine 24 et 25 par des écrasements 26 sur la tige 22 et 27 sur la tige 23, écrasements au ras des tubes d'alumine 24 et 25 et qui empêchent les tiges de coulisser dans les tubes.

Les tubes d'alumine 24 et 25 sont eux-mêmes positionnés à l'intérieur de la sonde d'analyse par une pièce cylindrique 28, en céramique et de préférence en alumine, qui possède deux orifices 29 et 30 à l'une de ses extrémités. C'est à travers ces orifices 29 et 30 que passent les deux tubes d'alumine 24 et 25. La fixation des tubes d'alumine dans le corps cylindrique 28 est assurée par un remplissage du volume intérieur, par une céramique liquide 31, laquelle durcit après coulage, soit sous l'effet de la température, soit sous effet d'une réaction chimique. L'avantage d'un remplissage par une céramique liquide 31 du corps céramique 28 est que les coefficients de dilatation sont égaux sinon voisins, selon la nature des céramiques, et de toutes façons voisins du coefficient de dilatation des deux tubes en alumine 24 et 25.

En outre, le chemin des courants de fuite entre les bornes de sortie du capteur est constitué par les fractions 46 et 47 des deux tubes d'alumine 24 et 25 qui émergent au-delà des trous 29 et 30 du corps céramique 28 ainsi que par la partie de la surface 32 qui se trouve entre ces deux tubes. Le corps 28 étant en céramique, la partie de surface 32 ne fait qu'améliorer et allonger le chemin des courants de fuite, mieux que si le montage était assuré par quelque pièce métallique par exemple. Les fractions 46 et 47 ont une longueur D d'environ 2 cm alors que la surface 32 sépare chacun des deux tubes céramiques 24 et 25 sur une distance d de 5 mm. Pour donner un ordre de grandeur, la longueur L de la sonde est approximativement de 10 cm. En l'absence des fractions 46 et 47, les courants de fuite superficiels auraient donc une distance d de 5 mm à parcourir. Les fractions 46 et 47 allongent le chemin entre les bornes de sortie du capteur 21 des courants de fuite superficiels de 4 cm. Entre les deux chemins des courants de fuite, on constate donc un rapport de 9 soit un coefficient d'environ 10 entre lesdits chemins.

De plus, les deux tubes 24 et 25 sont dans une alumine de pureté comprise entre 99,5% et 99,7% en poids, donc de résistivité comprise entre $10^{11}$ $\Omega$cm et $10^6$ $\Omega$cm aux températures de travail de la sonde. La tige métallique 22 sur sa portion comprise dans le corps céramique 28 est donc séparée de la tige métallique 23 par le tube céramique 24, le corps céramique 28 et le tube céramique 25. Un courant s'établissant à l'intérieur du corps 28 entre les deux tiges métalliques 22 et 23, doit donc traverser les deux tubes en alumine 24 et 25.

La température le long de la sonde d'analyse de gaz décroit rapidement. Pour une température de gaz de 800°C au voisinage du capteur 21 et de la surface 32, la température est 150°C au voisinage du ressort 37. La décroissance de la température n'est pas uniforme et est plus accentuée près de la surface 32. Pratiquement, la température baisse de 100°C à 150°C sur une profondeur d'environ 1 cm sous la surface 32. La résistivité des matériaux dépendant fortement de la température, la zone où les risques de conduction électrique sont les plus grands est située dans la céramique sur une profondeur d'environ 1 cm sous la surface 32, l'air n'étant pas conducteur électrique.

La distance d entre les deux tubes métalliques 22 et 23 est environ égale à 5 mm. Le diamètre des tiges métalliques est de 0,9 mm. Le diamètre intérieur des tubes céramiques 24 et 25 est de 1 mm et leur diamètre extérieur est de 2 mm. Un courant électrique allant de la tige 22 à la tige 23 à l'intérieur du corps 28 doit donc traverser une épaisseur de 1 mm due aux tubes céramiques 24 et 25 et une épaisseur de 5 mm due à la céramique du corps 28. Le rapport entre ces deux épaisseurs est donc d'environ 5, alors que le rapport des résistivités est supérieur à $10^3$. On constate donc que seuls les tubes céramiques 24 et 25 sont à considérer pour le calcul de la résistance électrique. En admettant que la partie conductrice est située sur une profondeur de 1 cm en dessous de la surface 32, on évalue cette résistance comme étant supérieur à un giga-ohm à 850°C.

Jusqu'à présent, l'invention a été décrite et est représentée sur la figure 3 avec deux bornes de sortie et deux conducteurs 22 et 23. Cependant, entre dans le domaine de l'invention le cas où un ou plusieurs capteurs sont montés en série sur une même plaquette 21, ou encore celui où interviendrait une ou plusieurs électrodes supplémentaires. Dans ce cas, la sonde selon l'invention comporte plus de deux tiges 22 et 23 et plus de deux tubes d'alumine 24 et 25, le nombre des sorties étant fonction des mesures effectuées soit au niveau du capteur 21, soit au niveau de l'électronique de traitement, mais dans tous les cas la masse du circuit de mesure étant différente de la masse du moteur sur laquelle est montée la sonde.

Le corps en céramique 28 est lui-même monté, du point de vue mécanique, dans un corps métallique 33 qui comporte un filetage 34 destiné à pouvoir serrer la sonde dans un pas de vis aménagé sur le pot d'échappement du moteur à contrôler. Mais en outre, ce corps métallique 33 comporte une série d'ailettes 35 destinées à évacuer les calories recueillies du côté de la tubulure des gaz d'échappement. Ceci a pour principale conséquence d'éviter un échauffement du câble par lequel sortent les signaux électriques, et de la partie mécanique de la sonde, ce qui pourrait les détériorer.

En outre, le corps métallique 28 comporte sur son extrémité opposée à celle qui porte le capteur un épaulement 36 sur lequel prend appui un ressort 37 qui est retenu après montage de la sonde par l'extrémité 38 de l'enveloppe métallique 33. Ainsi, le ressort 37 permet d'absorber les dilatations des différentes pièces et d'éviter les ruptures sous la contrainte de coefficients de dilatation différents entre le corps interne 28 en céramique et l'enveloppe externe 33 en métal. Il n'a aucune fonction de liaison électrique.

La sonde est enfin complétée par un capot 39, qui sera décrit

12

ultérieurement, ce capot étant maintenu en place en 40 entre un épaulement dans le corps interne céramique 28 et l'enveloppe externe métallique 33.

Le fait d'utiliser comme capteur un capteur à étalon interne supprime le problème de l'étanchéité qui a été évoqué au sujet des sondes selon l'art connu. Ainsi donc, dans la sonde selon l'invention, il n'est plus utile d'avoir une bonne étanchéité par un joint d'amiante graphitée ou de talc et le capot 39 peut présenter quelques fuites de gaz au niveau de l'épaulement 40 sans que cela n'ait aucune conséquence sur la précision des mesures effectuées.

La figure 1 a montré une vue en coupe et schématique du capteur utilisé dans ce type de sonde. Il a été dit que les connexions sont prises sur le capteur au moyen de brasures. Les figures 4 et 5 permettent de revenir plus en détail sur le mode de fixation des tiges 22 et 23 par brasure sur la plaquette du capteur.

La figure 4 représente un premier type de brasure au moyen de lames métalliques.

La figure 4 représente l'extrémité d'un capteur dont on aperçoit le substrat 1 et la couche d'émail 5 qui recouvre la pile de concentration à proprement parler. Sur l'extrémité considérée du substrat est déposée une couche de métal d'apport de brasure 7. Le métal d'apport de brasure doit avoir un point de fusion supérieur à la température maximale des gaz, c'est-à-dire environ 900°C. Il peut être apporté soit sous forme d'un ruban que l'on insère entre la plaquette 1 et la connexion à souder, soit par dépôts électrochimiques, soit par dépôts par sérigraphie, soit par plusieurs de ces procédés à la fois. Le métal d'apport de brasure est apporté soit sur l'extrémité de la connexion qui doit être brasée sur la plaquette, soit sur la plaquette, soit sur les deux à la fois. Ce métal d'apport peut être par exemple de l'or dont la température de fusion est 1063°C, ou un alliage d'or tel que par exemple l'or nickel à 15% de nickel dont la température de fusion est 950°C.

La lame de connexion 6 fait une boucle autour de l'extrémité de la plaquette 1 et est soudée par thermo-compression dans la zone

13

représentée en pointillé 41. Il est avantageux, en raison des vibrations liées inévitablement au fonctionnement d'un moteur thermique, que cette première brasure par thermo-compression soit complétée par une seconde soudure électrique de la lame sur elle-même dans la région 42. Une telle connexion est effectuée aux deux extrémités de la plaquette puisqu'il faut une connexion électrique sur chacune des électrodes de la pile de concentration.

La figure 5 représente une variante de la figure 4, variante dans laquelle les connexions sont établies non plus au moyen de lames métalliques mais au moyen d'un fil métallique. Dans ce second cas, la brasure elle-même est effectuée comme il vient d'être dit au sujet de la figure 4, mais au lieu de resouder le fil de connexion 6 sur lui-même comme cela était le cas pour la lame de connexion au moyen d'une soudure électrique 42, le fil de connexion 6 fait une boucle complète autour de la plaquette 1 du capteur puis passe à travers un trou 43 fait dans cette plaquette et y est fixé par brasure. Ceci assure que la brasure ne se brisera pas par suite des vibrations du moteur en marche.

La figure 6 représente le capot 39 qui complète la sonde selon l'invention, et protège le capteur 21. Ce capot est un corps métallique en forme cylindrique ou de tronc de cône de section ronde. Il comporte, à son extrémité ouverte, un épaulement 40 qui permet de bloquer le capot entre deux épaulements correspondants de l'enveloppe métallique 33 et du corps céramique 28. De façon à laisser les gaz atteindre le capteur, le capteur est percé sur sa paroi courbe de trous 44 et 45, réalisés tête-bêche par séries alternées, de forme semi-circulaires, obtenus par fraisage du capot selon un axe de fraise orthogonal à l'axe de symétrie du capot.

L'invention a été décrite en s'appuyant sur l'exemple d'un capteur de pression partielle ou de concentration en oxygène dans les gaz d'échappement d'un moteur à combustion interne mais elle s'applique également à tous types de sondes utilisant un capteur réalisé sur une plaquette selon la technologie des couches minces. Ce type de sonde convient à des mesures telles que les mesures

14

qualititives ou quantitatives dans des gaz industriels par exemple.

De la même façon, l'invention recouvre les sondes dans lesquelles un nombre de connexions supérieur aux deux connexions qui sont représentées sur les figures seraient utilisées telles que par exemple des sondes comportant un organe de réchauffement avec sa connexion ou des sondes comportant un capteur de mesure et un capteur d'alarme ou de régulation.

Pour tous ces types de sondes de mesure, la prise de raccordement sur les tiges métalliques qui sortent du corps à son extrémité opposée à celle qui porte le capteur à proprement parler se fait soit directement par soudure, soit par un connecteur, mais tous ont la particularité d'avoir une masse électrique qui est isolée.

15

# REVENDICATIONS

1. Sonde d'analyse de gaz, comportant un capteur (21) miniaturisé, réalisé sur une plaquette (1) par dépôts de couches minces, comprenant au moins deux électrodes (3 et 4) et étant entièrement plongé dans les gaz à analyser, cette sonde étant caractérisée en ce qu'elle comporte :

- au moins deux tiges métalliques (22 et 23), brasées à l'une de leurs extrémités sur le capteur (21) et gainées par deux tubes céramiques (24 et 25), à haute résistivité, dans lesquels elles sont immobilisées par écrasement partiel (26 et 27) à chaque extrémité du tube, pour prélever le signal électrique;

- un corps céramique (28), creux, dont une extrémité est munie d'orifices (29 et 30) de même manière que le diamètre extérieur des gaines céramiques (24 et 25), pour positionner les tiges métalliques (22 et 23);

- un remplissage, par de la céramique liquide (31) durcissable, du corps céramique (28) pour immobiliser les tiges métalliques (22 et 23);

- une enveloppe métallique (33) dotée d'ailettes de refroidissement (35);

- un ressort (37), qui s'appuie (en 36) sur un épaulement du corps céramique (28) et (en 38) sur l'enveloppe métallique (33), pour absorber les différences de dilatation entre les parties céramiques et les parties métalliques de la sonde.

2. Sonde d'analyse de gaz selon la revendication 1, caractérisée en ce que la composition des tubes céramiques (24 et 25) contient plus de 99,5% en poids d'alumine.

3. Sonde d'analyse de gaz selon l'une des revendications 1 ou 2, caractérisée en ce qu'une fraction (46 et 47) des tubes céramiques (24 et 25) émerge au-delà des orifices (29 et 30) du corps céramique (28).

4. Sonde d'analyse de gaz selon l'une des revendications 1 à 3, caractérisée en ce que chaque connexion sur les électrodes du capteur est réalisée par brasure d'une tige métallique (6) sur une extrémité de la plaquette (1) du capteur au moyen d'au moins une couche solide (7) de métal d'apport de brasure, préalablement disposée entre tige (6) et plaquette (1), ce métal d'apport ayant une température de fusion supérieure à la température des gaz à mesurer, la brasure sur couches minces étant effectuée par thermo-compression de la région (41) dans laquelle la couche de métal d'apport est insérée entre la tige (6) et la plaquette (1).

5. Sonde d'analyse de gaz selon la revendication 4, caractérisée en ce que la couche solide (7) de métal d'apport de brasure est déposée par sérigraphie sur la plaquette (1).

6. Sonde d'analyse de gaz selon la revendication 4, caractérisée en ce que la couche solide (7) de métal d'apport de brasure est déposée par électrochimie sur la tige métallique (6).

7. Sonde d'analyse de gaz selon la revendication 4, caractérisée en ce que chaque tige métallique de connexion (6) est rebouclée une fois autour de la plaquette (1) et soudée sur elle-même (en 42).

8. Sonde d'analyse de gaz selon la revendication 4, caractérisée en ce que chaque tige métallique de connexion est rebouclée au moins une fois autour de la plaquette (1) et brasée dans un trou (43) pratiqué dans la plaquette.

9. Sonde d'analyse de gaz selon l'une des revendications 1 à 8, caractérisée en ce que le capteur (21) est protégé par un capot (39) métallique, fixé entre l'enveloppe métallique (33) et le corps céramique (28) par un épaulement (40) et qui est percé, sur sa paroi courbe, de trous demi-circulaires (44 et 45), par séries alternées, réalisées par fraisage du capot selon un axe orthogonal à l'axe du capot.

# FIG.1

# FIG.4

# FIG.5

# FIG.2

# FIG.3

# FIG.6

**0044790**

Office européen
des brevets

**RAPPORT DE RECHERCHE EUROPEENNE**

Numéro de la demande

EP 81 40 1151

| Catégorie | Citation du document avec Indication, en cas de besoin, des parties pertinentes | Revendica-tion concernée |
|---|---|---|
| | **DOCUMENTS CONSIDERES COMME PERTINENTS** | |
| A | FR - A - 2 392 380 (RENAULT)<br>* Page 4, lignes 34-37; page 5, page 6, revendications *<br>-- | 1 |
| A | US - A - 4 209 378 (H. SCHINOHARA)<br>* Revendications *<br>-- | 1 |
| A | DE - A - 2 710 218 (R. BOSCH)<br>* Page 4, dernier paragraphe, pages 5-7 *<br>-- | 1 |
| A | US - A - 3 141 835 (M. ROLIN)<br>* Figure 1 *<br>---- | 1 |

**CLASSEMENT DE LA DEMANDE (Int. Cl.³)**

G 01 N 27/56

**DOMAINES TECHNIQUES RECHERCHES (Int. Cl.³)**

G 01 N 27/56

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-10-1981 | CALLEWAERT-HAEZ |

OEB Form 1503.1  06.78